# EUROPEAN PATENT APPLICATION

(11) **EP 2 536 163 A1**
(43) Date of publication of application: **19.12.2012**
(21) Application number: 11817696.5
(22) Date of filing: 03.05.2011
(51) Int. Cl.: H04N 21/238

(54) **METHOD, DEVICE AND SYSTEM FOR REALIZING THE INTERACTIVE CAROUSEL CHANNEL**

(30) Priority: 17.08.2010 CN 201010255374
(71) Applicant: Huawei Technologies Co., Ltd., Shenzhen, Guangdong 518129 (CN)
(72) Inventor: YU, Yong, Shenzhen Guangdong 518129 (CN); WEI, Zhigang, Shenzhen Guangdong 518129 (CN)
(74) Representative: Pfenning, Meinig & Partner GbR
(86) International application number: PCT/CN2011/073624
(87) International publication number: WO 2012/022168

(57) **Abstract**

Embodiments of the present invention disclose a method, an apparatus, and a system for implementing an interactive near video on demand (NVOD) channel. The present invention relates to the field of NVOD channels and can implement an interactive NVOD channel at a low operation cost. The method includes: sending NVOD program metadata to a user equipment; receiving a request for playing an NVOD program, where the playing request is sent by the user equipment and includes the NVOD program that a user selects from the NVOD program metadata through the user equipment; determining, according to the playing request, a next NVOD program to be played, and sending a media stream of the determined NVOD program in multicast/broadcast mode. The present invention is mainly applied to NVOD channels and may be applied to IMS-based IPTV systems.

## Description

This application claims priority to Chinese Patent Application No. 201010255374.X, filed with the Chinese Patent Office on August 17, 2010, and entitled "METHOD, APPARATUS, AND SYSTEM FOR IMPLEMENTING INTERACTIVE NEAR VIDEO ON DEMAND CHANNEL", which is incorporated herein by reference in its entirety.

### FIELD OF THE INVENTION

The resent invention relates to the field of near video on demand (NVOD) channels, and in particular, to a method, an apparatus, and a system for implementing an interactive NVOD channel.

### BACKGROUND OF THE INVENTION

The NVOD (Near Video ON Demand, NVOD) channel service is an enhanced service in an interactive internet protocol television (Internet Protocol Television, IPTV) system. A carrier selects a set of programs, for example, one or more of a hot movie, a carefully selected variety show, and a series may constitute a set of programs, and the programs in the selected set of programs are played in an arranged sequence or cyclically on one or more channels, which constitute an NVOD channel.

In order to implement interactivity between the NVOD channel and a user, the prior art discloses an kind of interactive NVOD channels. Adopt a way of deploying a voice-on-demand system on an NVOD channel server, a terminal user accesses the interactive NVOD channel server by using a voice device, such as a telephone, and demands a program, the next NVOD program required to be played is selected according to the times or time of demands, and the interactive NVOD server plays the next NVOD program required to be played, which is demanded by the user. Although this scheme can implement the interaction between the NVOD channel and the user, additional devices and costs are needed for deploying the voice-on-demand system, for example, the voice device for on-demand programs is not an existing IPTV device, thereby increasing the operation cost of the NVOD channel.

### SUMMARY OF THE INVENTION

Embodiments of the present invention provide a method, an apparatus, and a system for implementing an interactive NVOD channel, which can implement the interactive NVOD channel at a low operation cost.

To achieve the foregoing objective, embodiments of the present invention adopt the following technical solutions:
A method for implementing an interactive NVOD channel includes:
   sending NVOD program metadata to a user equipment;
   receiving a request for playing an NVOD program, where the playing request is sent by the user equipment and includes an identifier of the NVOD program that a user selects from the NVOD program metadata through the user equipment;
   determining, according to the playing request, a next NVOD program to be played; and
   sending a media stream of the determined NVOD program in multicast/broadcast mode.
An apparatus for implementing an interactive NVOD channel includes:
   a sending unit, configured to send NVOD program metadata to a user equipment;
   a receiving unit, configured to receive a request for playing an NVOD program, where the playing request is sent by the user equipment and includes an identifier of the NVOD program that a user selects from the NVOD program metadata through the user equipment;
   an acquiring unit, configured to determine, according to the playing request, a next NVOD program to be played; and
   a sending unit, configured to send a media stream of the determined NVOD program in multicast/broadcast mode.
A system for implementing an interactive NVOD channel includes:
   a user equipment, configured to receive NVOD program metadata sent by an NVOD server; and
   an NVOD channel server, configured to receive a request for playing an NVOD program, where the playing request is sent by the user equipment and includes an identifier of the NVOD program that a user selects from the NVOD program metadata through the user equipment, and determine, according to the playing request, a next NVOD program to be played; and after determining the next NVOD program to be played, send a media stream of the determined NVOD program in multicast/broadcast mode.

In the method, apparatus, and system for implementing an interactive NVOD channel according to the embodiments of the present invention, the user may directly select, through the user equipment, the next NVOD program that the user wishes to play, without the need to add a device outside the IPTV system to demand the next NVOD program that the user wishes to play. After the user directly selects, through the user equipment, the next NVOD program that the user wishes to play, that is, after the user sends a playing request, the apparatus for implementing an interactive NVOD channel can receive the playing request of the user, and determine, according to the playing request, the next NVOD program to be played, and after determining the next NVOD program to be played, send, to the user equipment, a media stream of the next NVOD program to be played.

According to the technical solutions of the embodiments of the present invention, the user can directly participate, through the user equipment of the IPTV system, in the selection of the program to be played by the NVOD channel server, so as to implement the interactive NVOD channel. Furthermore, no additional large-size device is needed for implementing the technical solutions of the method, apparatus, and system for implementing an interactive NVOD channel according to the embodiments of the present invention, and the technical solutions can be implemented by simply making corresponding expansion and modification in software, so the operation cost for implementing the technical solutions of the embodiments of the present invention is low.

### BRIEF DESCRIPTION OF THE DRAWINGS

To make the technical solutions of the embodiments of the present invention clearer, the accompanying drawings used in the description of the embodiments are briefly described hereunder. Evidently, the accompanying drawings illustrate only some exemplary embodiments of the present invention and persons of ordinary skill in the art can derive other drawings based on these drawings without creative efforts.
FIG. 1 is a flowchart of a method for implementing an interactive NVOD channel according to an embodiment of the present invention;
FIG. 2 is a flowchart of an improved implementation manner of a method for implementing an interactive NVOD channel according to an embodiment of the present invention;
FIG. 3A and FIG. 3B are a flowchart of a method for implementing an interactive NVOD channel in an IPTV system based on an IP multimedia subsystem (IMS) according to an embodiment of the present invention;
FIG. 4 is a flowchart of a process for establishing a connection between a user and an NVOD channel server in an IPTV system based on an IP multimedia subsystem (IMS) according to an embodiment of the present invention;
FIG. 5 is a flowchart of a process for establishing a connection between a user and an NVOD channel server in a conventional IPTV system according to an embodiment of the present invention;
FIG. 6 is a structural diagram of an apparatus for implementing an interactive NVOD channel according to an embodiment of the present invention;
FIG. 7 is a structural diagram of an improved implementation manner of an apparatus for implementing an interactive NVOD channel according to an embodiment of the present invention;
FIG. 8 is a structural diagram of a system for implementing an interactive NVOD channel according to an embodiment of the present invention; and
FIG. 9 is a flowchart of a process for adding a new NVOD channel according to an embodiment of the present invention.

### DETAILED DESCRIPTION OF THE EMBODIMENTS

The technical solutions of the embodiments of the present invention are hereinafter described clearly and completely with reference to the accompanying drawings in the embodiments of the present invention. It is evident that the described embodiments are only some embodiments of the present invention, rather than all embodiments of the present invention. All other embodiments that persons of ordinary skill in the art derive without creative efforts based on the embodiments of the present invention fall within the protection scope of the present invention.

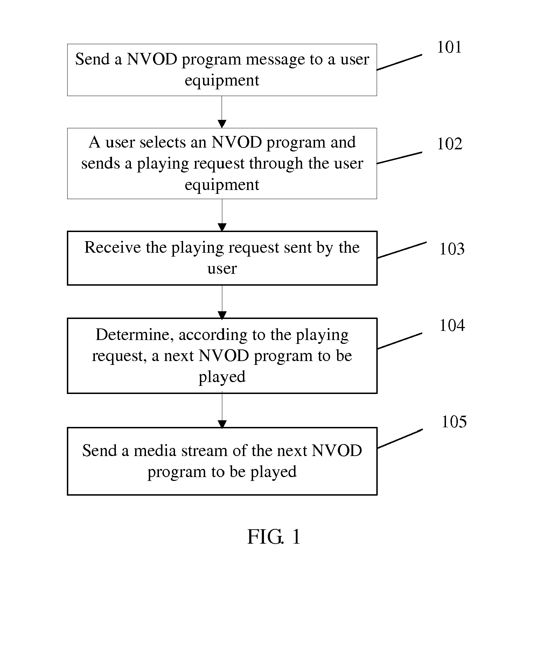

An embodiment of the present invention provides a method for implementing an interactive NVOD channel. As shown in FIG. 1, the method includes the following steps:
101. Send NVOD program metadata to a user equipment. The NVOD program metadata includes: a list of program names, durations of programs, brief descriptions of contents of programs, and identifiers for identifying NVOD programs, and so on. The user equipment receives and displays the NVOD program metadata for selection by a user, and the user may browse a list of NVOD program names and detailed information of a single NVOD program.
102. The user directly selects, through the user equipment, a next NVOD program that the user wishes to play, that is, the user sends a playing request.
103. After the user selects, through the user equipment, the next NVOD program that the user wishes to play, that is, after the user sends the playing request, receive the request for playing the NVOD program, where the playing request is sent by the user equipment and includes the NVOD program that the user selects from the NVOD program metadata through the user equipment.
104. Determine, according to the playing request, the next NVOD program to be played.
105. After determining the next NVOD program to be played, send a media stream of the determined NVOD program in multicast or broadcast mode to the user equipment.

In the method for implementing an interactive NVOD channel according to this embodiment, the user may directly select, through the user equipment, the next NVOD program that the user wishes to play; after the user directly selects, through the user equipment, the next NVOD program that the user wishes to play, that is, after the user sends the playing request through the user equipment, the playing request of the user is received, and the next NVOD program to be played is determined according to the playing request; and after the next NVOD program to be played is determined, the media stream of the next NVOD program to be played is sent.

According to the technical solution of this embodiment, the user can directly participate, through the user equipment, in the selection of the NVOD program to be played by an NVOD channel server, so as to implement the interactive NVOD channel. Furthermore, no additional large-size device is needed for implementing the technical solution of the method for implementing an interactive NVOD channel according to this embodiment of the present invention, and the technical solution can be implemented by simply making corresponding expansion and modification in software and adding some functional modules. Therefore, the operation cost for implementing the technical solution of this embodiment of the present invention is low.

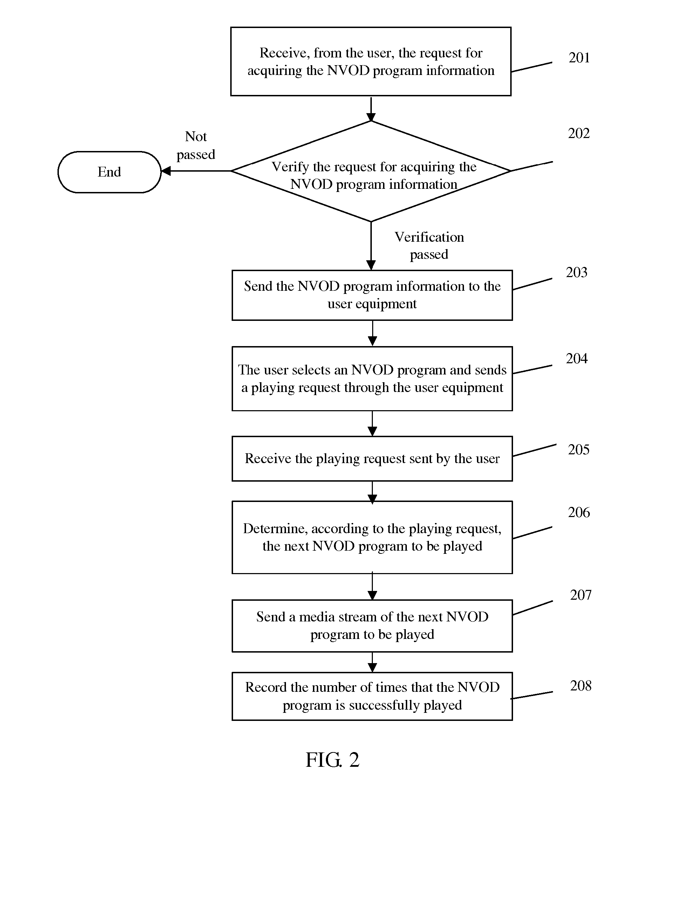

An embodiment of the present invention provides an improved method for implementing an interactive NVOD channel. As shown in FIG. 2, the method includes the following steps:
201. A user selects, according to needs, whether NVOD program metadata needs to be acquired, and after the user sends a request for acquiring the NVOD program metadata, the request sent by the user for acquiring the NVOD program metadata is received. Because the user may determine, according to the needs of the user, whether the NVOD program metadata needs to be acquired, the interactivity between an NVOD program server and the user is improved.
202. Verify the request of acquiring the NVOD program metadata. After the verification is passed, step 203 is executed. If the verification is not passed, the process ends.
Through this step, the validity of a user equipment is verified. When an NVOD channel is a fee-based service, paying users and not paying users can be distinguished through the verification. According to the result of the verification, it is determined whether to send the NVOD program metadata to the user or not. Or, when users are classified into different levels and different users have different authorities to request playing, different levels of users can be distinguished through the verification and different request authorities are given.

When the NVOD channel described in this embodiment of the present invention is a public program and it is not necessary to distinguish the users, this step may be omitted.
203. Send the NVOD program metadata to the user equipment. The NVOD program metadata includes: a list of program names, durations of programs, brief descriptions of contents of programs, and identifiers for identifying NVOD programs, and so on. The user equipment receives and displays the NVOD program metadata for selection by the user, and the user may browse a list of NVOD program names and detailed information of a single NVOD program.
204. The user directly selects, through the user equipment, a next NVOD program that the user wishes to play, that is, the user sends a playing request.
205. After the user selects, through the user equipment, the next NVOD program that the user wishes to play, that is, after the user sends the playing request, the user receives the request for playing the NVOD program, where the playing request is sent by the user equipment and includes the NVOD program that the user selects from the NVOD program metadata through the user equipment.
206. Determine, according to the playing request, the next NVOD program to be played.
   The next NVOD program to be played may be determined in the following two ways:
   Firstly, according to a time sequence, the first NVOD program requested to be played is determined to be the next NVOD program to be played. When the next NVOD program to be played is determined in this way, if a user wants to successfully request the playing, the user needs to send the playing request actively and quickly, which may motivate the user.
   Secondly, an NVOD program that is the most frequently requested to be played during a specified time period may also be determined to be the next NVOD program to be played. When the next NVOD program to be played is determined in this way, users have sufficient time to select target NVOD programs, and played NVOD programs are expected by most of the users and the requirements of most of the users may be met.
207. After determining the next NVOD program to be played, send a media stream of the determined NVOD program in multicast or broadcast mode to the user equipment. The media stream of the determined NVOD program may be sent to the user equipment in multicast or broadcast mode in the following two ways:
   Firstly, after the next NVOD program to be played is determined, the media stream of the determined NVOD program is sent immediately in multicast or broadcast mode. This way responds quickly to the playing request of the user and may implement the playing request of the user as soon as possible.
   Secondly, after the next NVOD program to be played is determined, the media stream of the determined NVOD program is not sent in multicast or broadcast mode until a currently played NVOD program is played to the end. This way responds slowly to the playing request of the user, but the NVOD program that is played each time can be played to the end, so that the user enjoys the whole NVOD program.
208. Record the number of times that the NVOD program is successfully played.

After the playing request is accepted and a corresponding NVOD program is played, the number of times that each NVOD program is successfully played is recorded, so as to summarize and collect statistics on the number of times that each NVOD program is played, and provide a basis for the management of NVOD programs, such as adding and deleting NVOD programs.

In the method for implementing an interactive NVOD channel according to this embodiment, the user may select, according to needs, whether the NVOD program metadata needs to be acquired. After the user sends the request for acquiring the NVOD program metadata, the request for acquiring the NVOD program metadata is verified when necessary; when the verification is passed, the NVOD program metadata is sent to the user equipment, so that the user may directly select, through the user equipment, the next NVOD program that the user wishes to play; after the user directly selects, through the user equipment, the next NVOD program that the user wishes to play, that is, after the user sends the playing request through the user equipment, the playing request of the user is received, and the next NVOD program to be played is determined according to the playing request; and after the next NVOD program to be played is determined, the media stream of the next NVOD program to be played is sent and the number of times that the NVOD program is successfully played is recorded.

According to the technical solution of this embodiment, the user can directly participate, through the user equipment, in the selection of the NVOD program to be played by the
NVOD channel server, so as to implement the interactive NVOD channel. Furthermore, no additional large-size device is needed for implementing the technical solution of the method for implementing an interactive NVOD channel according to this embodiment of the present invention, and the technical solution can be implemented by simply making corresponding expansion and modification in software and adding some functional modules. Therefore, the operation cost for implementing the technical solution of this embodiment of the present invention is low.

Furthermore, the user may select, according to needs, whether the NVOD program metadata needs to be acquired, so as to improve the interactivity between the user and an NVOD channel server.

As an improved implementation manner of the improved method for implementing an interactive NVOD channel according to this embodiment, the NVOD program metadata described in this embodiment also includes NVOD programs and on-demand links corresponding to the NVOD programs, and the playing request is sent by the user equipment according to an on-demand link corresponding to the NVOD program selected by the user. The on-demand link facilitates the user's operation. The user may directly send the playing request by selecting the on-demand link, without the need of any additional device, such as a telephone.

In the method for implementing an interactive NVOD channel according to this embodiment, the user may directly send the playing request through an on-demand link in the NVOD program metadata shown on the user equipment, and no additional large-size device is needed for implementing the technical solution of the method for implementing an interactive NVOD channel according to this embodiment of the present invention, and the technical solution can be implemented by simply adding a corresponding module for processing the playing request and by making corresponding expansion and modification in software, so the operation cost for implementing the technical solution of this embodiment of the present invention is low.

Multiple methods for determining, according to the playing request, the next NVOD program to be played in this embodiment exist, and the methods described in this embodiment for determining the next NVOD program to be played are two common methods.

In practical applications, an interactive voting NVOD channel and an interactive on-demand NVOD channel may be designed. The user may send a request for an NVOD program by using a remote control to select an NVOD program guide or by controlling a mouse to click an NVOD program guide or by other means that may implement selection of an NVOD program through the user equipment. The implementation manners of the interactive voting NVOD channel and the interactive on-demand NVOD channel are described hereinafter by taking the process that an NVOD program request is sent by using a remote control to select a program guide as an example.

For the interactive voting NVOD channel, a user may browse all NVOD program metadata included in the NVOD channel, and for a next program to be played, the user may use a remote control to vote through the user equipment. The user may use the remote control to select to check the voting of a current video on demand (COD) list. Before a next program is played, the user may use the remote control to select a certain NVOD program in an NVOD program list shown on the user equipment for voting, for example, to select an NVOD program A, which means that the next NVOD program that the user requests playing in the NVOD channel is the NVOD program A. At this time, the user equipment sends a request for playing the NVOD program A. After the user votes through the user equipment, all user votes of the NVOD channel are summarized, the number of user votes of each NVOD program in the NVOD channel is queued and counted, and a next program to be played in the NVOD channel is decided according to the votes. After the next NVOD program to be played is determined, the media stream of the determined NVOD program to be played next is sent.

For the interactive on-demand NVOD channel, a user may browse all NVOD program metadata included in the NVOD channel, and for a next program to be played, the user may use a remote control to demand a program through the user equipment. The user may demand favorite programs of the user in the interval between two programs that are played, such as at the time of playing default advertisement programs, which is similar to demanding programs of the Broadcasting & Television Bureau by telephone. Herein, a terminal user may use a remote control to select a certain NVOD program from an NVOD program list shown on the user equipment and demand the selected NVOD program, for example, demand an NVOD program A. At this time, the user equipment sends a request for playing the NVOD program A. After the user demands the NVOD program A through the user equipment, the playing request of the user is received, and the next NVOD program to be played in the NVOD channel is decided according to playing requests of all users. After the next NVOD program to be played is determined, the media stream of the determined the next NVOD program is sent.

The NVOD channel server described in this embodiment of the present invention includes: a content metadata server (Metadata Server), a content management server (CMS), an NVOD service control function (NVOD-SCF), an NVOD media control function (NVOD-MCF), and an NVOD media server (NVOD-MDF).

The key characteristic of the IMS is the use of the SIP protocol and access independence. The IMS system uses the SIP protocol to perform end-to-end call control. SIP is simple, compatible and modularly designed and is controlled by a third party, and therefore the SIP becomes a mainstream protocol in an Internet-based communication market.

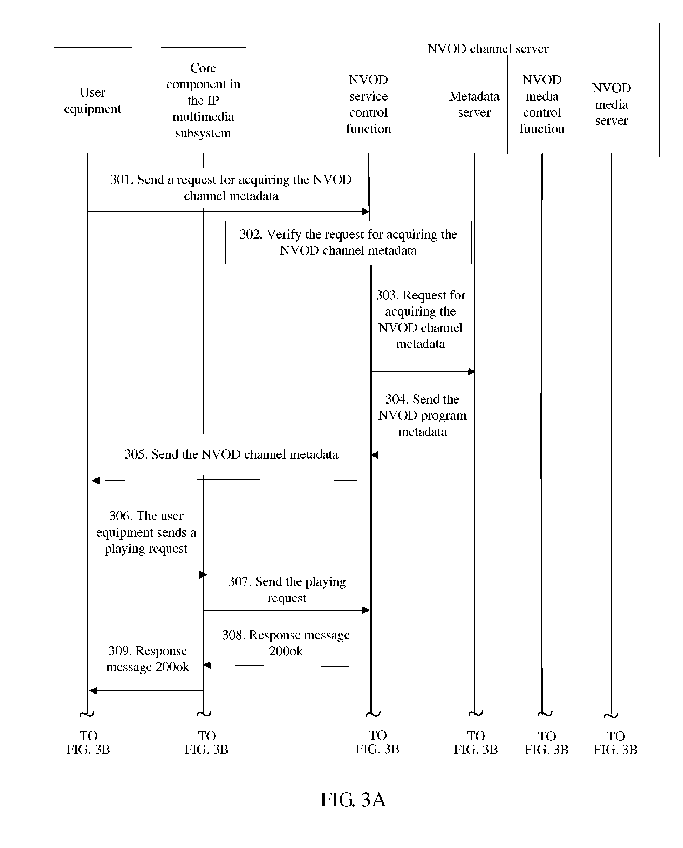

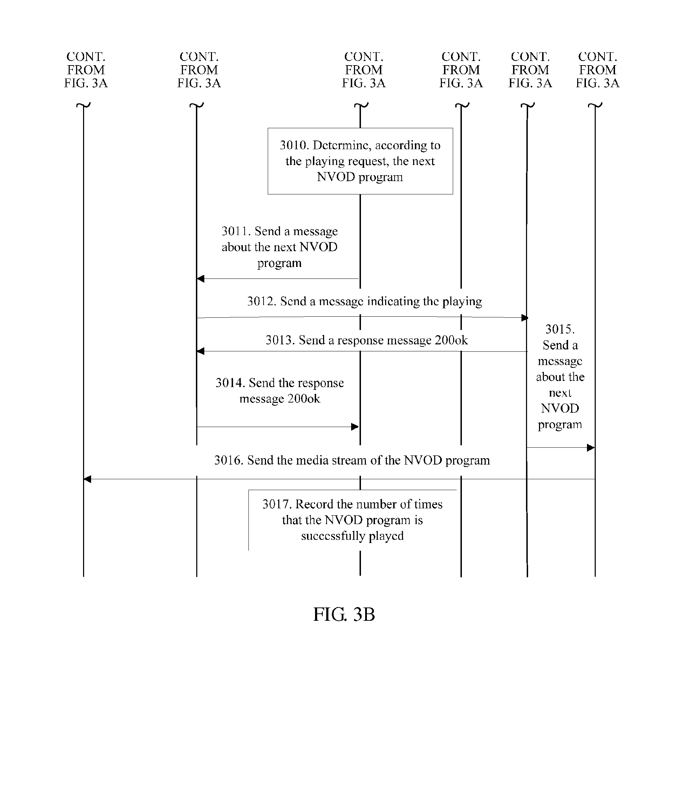

The IMS is a recognized uniform system architecture for implementing network and service convergence. An application scheme of a method for implementing an interactive NVOD channel according to an embodiment of the present invention is described hereinafter by taking an IPTV system based on an IP multimedia subsystem (IMS) as an example. As shown in FIG. 3A and FIG. 3B, the application scheme includes the following steps:
301. A user may determine, according to needs of the user, whether to acquire NVOD program metadata or not, and after the user sends, to an NVOD channel server, a request for acquiring the NVOD program metadata, an NVOD service control function in the NVOD channel server receives the request for acquiring the NVOD program metadata sent by the user.
   Because the user may determine, according to the needs of the user, whether to acquire the NVOD program metadata or not, the interactivity between an NVOD program server and the user is improved.
302. The NVOD service control function verifies the request for acquiring the NVOD program metadata. After the verification is passed, step 303 is executed. If the verification is not passed, the process ends.
   Through this step, the validity of a user equipment is verified. When an NVOD channel is a fee-based service, paying users and not paying users can be distinguished through the verification. According to the result of the verification, it is determined whether to send the media stream of the NVOD program to the user or not. Or, when the users are classified into different levels and different users have different authorities to request playing, different levels of users can be distinguished through the verification, and different request authorities are given.
   When the NVOD channel described in this embodiment of the present invention is a public program and it is not necessary to distinguish the users, this step may be omitted.
303. The NVOD service control function sends the request for acquiring the NVOD program metadata to an NVOD metadata server.
304. After receiving the request for acquiring the NVOD program metadata, the NVOD metadata server sends the NVOD program metadata to the NVOD service control function.
305. After receiving the NVOD program metadata, the NVOD service control function forwards the NVOD program metadata to the user equipment. The NVOD program metadata includes information, such as a list of program names, durations of programs, brief descriptions of contents of programs, and identifiers for identifying NVOD programs. The user equipment receives and displays the NVOD program metadata for selection by the user, and the user may browse a list of NVOD program names and detailed information of a single NVOD program.
306. After receiving the NVOD program metadata, the user equipment displays NVOD program information, and the user may directly select, through the user equipment, a next NVOD program that the user wishes to play, that is, the user sends a playing request.
   After the user sends the playing request, a core component (IMS Core) in the IMS system receives the request for playing the NVOD program, where the playing request is sent by the user equipment and includes an NVOD program that the user selects from the NVOD program metadata through the user equipment.
307. After receiving the playing request, the IMS Core forwards the playing request to the NVOD service control function in the NVOD channel server.
308. After receiving the playing request, the NVOD service control function responds to the playing request and sends a response message 200ok to the IMS Core.
309. After receiving the response message 200ok, the IMS Core forwards the response message 200ok to the user equipment.
3010. The NVOD service control function determines, according to the playing request, the next NVOD program to be played. The next NVOD program to be played may be determined in the following two ways:
   Firstly, according to a time sequence, a first NVOD program requested to be played is determined to be the next NVOD program to be played. When the next NVOD program to be played is determined in this way, if a user wants to successfully request the playing, the user needs to send the playing request actively and quickly, which may motivate the user.
   Secondly, an NVOD program that is most frequently requested to be played during a specified time period may also be determined to be the next NVOD program to be played. When the next NVOD program to be played is determined in this way, users have sufficient time to select target NVOD programs, and played NVOD programs are expected by most of the users and the requirements of most of the users may be met.
3011. After determining the next NVOD program to be played, the NVOD service control function sends a message about the next NVOD program to the IMS Core.
3012. The IMS Core sends, to the NVOD media control function, a message indicating the playing of the determined NVOD program to be played next.
3013. After receiving the message indicating the playing of the determined NVOD program to be played next, the NVOD media control function responds to the message indicating the playing and sends the response message 200 ok to the IMS Core.
3014. After receiving the response message 200ok, the IMS Core sends the response message 200ok to the NVOD service control function.
3015. The NVOD media control function sends, to the NVOD media server, the message about the determined NVOD program to be played next.
3016. According to the received message about the next NVOD program to be played, the NVOD media server sends the media stream of the determined NVOD program to the user equipment in multicast or broadcast mode. The sending may be performed in the following two ways:
   Firstly, after the next NVOD program to be played is determined, the media stream of the determined NVOD program is sent immediately in multicast or broadcast mode. This way responds quickly to the playing request of the user and may implement the playing request of the user as soon as possible.
   Secondly, after the next NVOD program to be played is determined, the media stream of the determined NVOD program is not sent in multicast or broadcast mode until a currently played NVOD program is played to the end. This way responds slowly to the playing request of the user, but the NVOD program that is played each time can be played to the end, so that the user enjoys the whole NVOD program.
3017. The NVOD service control function records the number of times that the NVOD program is successfully played.

After the playing request is accepted and a corresponding NVOD program is played, the number of times that each NVOD program is successfully played is recorded, so as to summarize and collect statistics on the number of times that each NVOD program is played, and provide a basis for the management of NVOD programs, such as adding and deleting NVOD programs.

In the method for implementing an interactive NVOD channel according to this embodiment, the user may select, according to needs, whether the NVOD program metadata needs to be acquired. After the user sends the request for acquiring the NVOD program metadata, the request for acquiring the NVOD program metadata is verified when necessary; when the verification is passed, the NVOD program metadata is sent to the user equipment, so that the user may directly select, through the user equipment, the next NVOD program that the user wishes to play; after the user directly selects, through the user equipment, the next NVOD program that the user wishes to play, that is, after the user sends the playing request through the user equipment, the playing request of the user is received; after the playing request is received, a response is made to the playing request, where a timely response makes the interaction of the metadata more smooth, and then the next NVOD program to be played is determined according to the playing request; and after the next NVOD program to be played is determined, the determined NVOD program to be played next is indicated, a response is made to the indication, the media stream of the next NVOD program to be played is sent and the number of times that the NVOD program is successfully played is recorded.

According to the technical solution of this embodiment, the user can directly participate, through the user equipment, in the selection of the NVOD program to be played by the NVOD channel server, so as to implement the interactive NVOD channel. Furthermore, no additional large-size device is needed for implementing the technical solution of the method for implementing an interactive NVOD channel according to this embodiment of the present invention, and the technical solution can be implemented by simply making corresponding expansion and modification in software and adding some functional modules. Therefore, the operation cost for implementing the technical solution of this embodiment of the present invention is low. The IMS is a recognized uniform system architecture for implementing network and service convergence, and may improve network security. The user may select, according to needs, whether the NVOD program metadata needs to be acquired, so as to improve the interactivity between the user and the NVOD channel server.

As an implementation manner of the improved method for implementing an interactive NVOD channel according to this embodiment, the NVOD program metadata described in this embodiment also includes NVOD programs and on-demand links corresponding to the NVOD programs, and the playing request is sent by the user equipment according to an on-demand link corresponding to the NVOD program selected by the user. The on-demand link facilitates the user's operation. The user may directly send the playing request by selecting the on-demand link, without the need of any additional device, such as a telephone.

In the method for implementing an interactive NVOD channel according to this embodiment, the user may directly send the playing request through an on-demand link in the NVOD program metadata shown on the user equipment, and no additional large-size device is needed for implementing the technical solution of the method for implementing an interactive NVOD channel according to this embodiment of the present invention, and the technical solution can be implemented by simply adding a corresponding module for processing the playing request and by making corresponding expansion and modification in software, so the operation cost for implementing the technical solution of this embodiment of the present invention is low.

Multiple methods for determining, according to the playing request, the next NVOD program to be played in this embodiment exist, and the methods described in this embodiment for determining the next NVOD program to be played are two common methods.

In practical applications, an interactive voting NVOD channel and an interactive on-demand NVOD channel may be designed. The user may send a request for an NVOD program by using a remote control to select a program guide or by controlling a mouse to click an NVOD program guide or by other means that may implement selection of an NVOD program through the user equipment. The process that an NVOD program request is sent by using a remote control to select a program guide is described hereinafter.

For the interactive voting NVOD channel, a user may browse all program metadata included in the NVOD channel, and for a next program to be played, the user may use a user equipment to vote. The user may use the remote control to select to check the voting of a current video on demand (COD) list. Before a next program is played, the user may use the remote control to select a certain NVOD program in an NVOD program list shown on the user equipment for voting, for example, to select an NVOD program A, which means that the next NVOD program that the user requests playing in the NVOD channel is the NVOD program A. At this time, the user equipment sends a request for playing the NVOD program. After the user votes through the user equipment, all user votes of the NVOD channel are summarized, the number of user votes of each NVOD program in the NVOD channel is queued and counted, and a next program to be played in the NVOD channel is decided according to the votes. After the next NVOD program to be played is determined, the stream of the NVOD program is sent.

For the interactive on-demand NVOD channel, a user may browse all program metadata included in the NVOD channel, and for a next program to be played, the user may use a user equipment to demand a program. The user may demand favorite programs of the user in the interval between two programs that are played, such as at the time of playing default advertisement programs, which is similar to demanding programs of the Broadcasting & Television Bureau by telephone. Herein, a terminal user may use a remote control to select a certain NVOD program from an NVOD program list shown on the user equipment and demand the selected NVOD program, for example, demand an NVOD program A. At this time, the user equipment sends a message, that is, a playing request of the user. After the user demands, through the user equipment, the next NVOD program to be played, playing requests of all users are received, and the next NVOD program to be played in the NVOD channel is decided according to the playing requests of all users; and the stream of the NVOD program is sent.

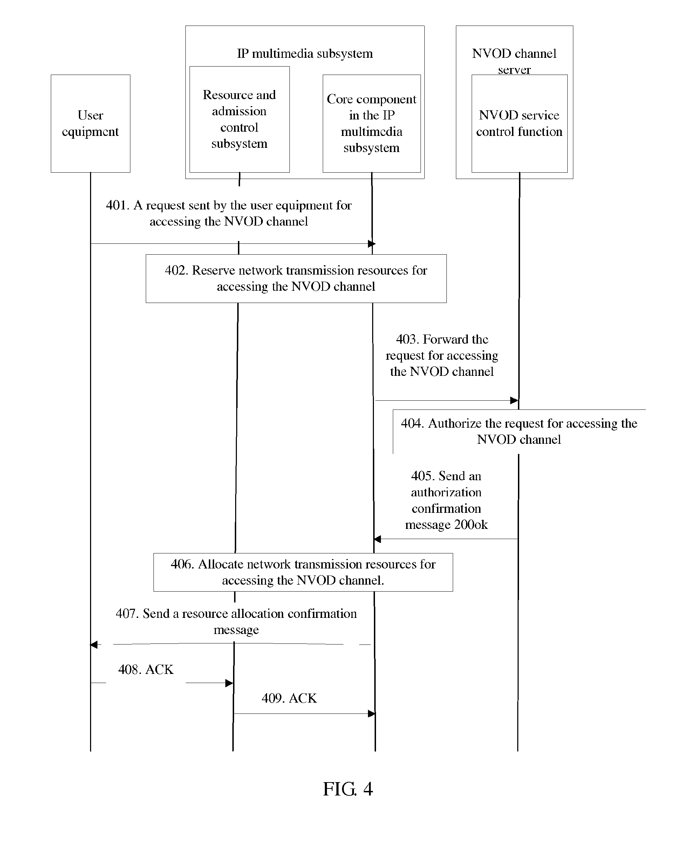

In an IPTV system based on an IP multimedia subsystem (IMS) in this embodiment, as shown in FIG. 4, a process that a user accesses an NVOD channel and establishes a connection with an NVOD channel server includes the following steps:
401. After a user sends, through a user equipment, a request for accessing an NVOD channel, an IMS Core receives the request for accessing the NVOD channel.
402. After the IMS Core receives the request for accessing the NVOD channel, the IMS system reserves network transmission resources for accessing the NVOD channel.
403. The IMS Core forwards the request for accessing the NVOD channel to an NVOD service control function.
404. After receiving the request for accessing the NVOD channel, the NVOD service control function authorizes the request for accessing the NVOD channel.
405. After authorizing the request for accessing the NVOD channel, the NVOD service control function sends a confirmation message to the IMS Core.
406. After receiving the confirmation message, an IMS system allocates the network transmission resources for accessing the NVOD channel.
407. After allocating the network transmission resources, the IMS Core sends, to the user equipment, a notification indicating that the network transmission resources are allocated to the request for accessing the NVOD channel.
408. After receiving the notification indicating that the network transmission resources are allocated to the request for accessing the NVOD channel, the user equipment sends a SIP message to a resource and admission control subsystem (RACS) in the IMS system.
409. After receiving the SIP message, the RACS forwards the SIP message to the IMS Core.

The process that the user accesses the NVOD channel and establishes the connection with the NVOD channel server as described in this embodiment is consistent with the process for general multicast channels specified by TISPAN (Telecommunications and Internet Converged Services and Protocols for Advanced Networking, Telecommunications and Internet Converged Services and Protocols for Advanced Networking).

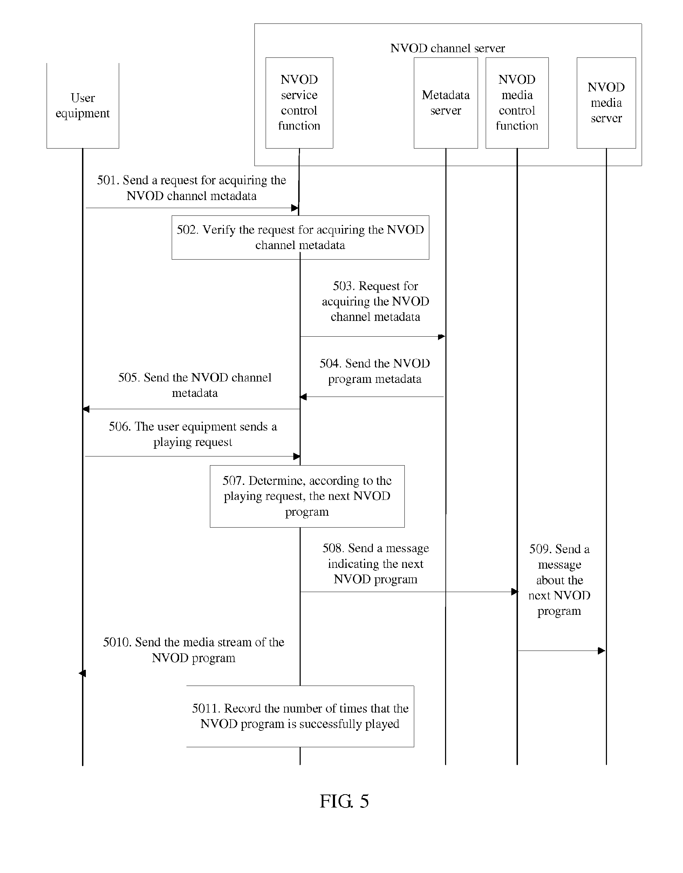

An application scheme of a method for implementing an interactive NVOD channel according to this embodiment of the present invention is described hereinafter by taking a conventional IPTV system as an example. As shown in FIG. 5, the application scheme includes the following steps:
501. A user may determine, according to needs of the user, whether to acquire NVOD program metadata or not, and after the user sends a request for acquiring the NVOD program metadata to an NVOD channel server, an NVOD service control function in the NVOD channel server receives the request for acquiring the NVOD program metadata, where the request is sent by the user.
   Because the user may determine, according to needs of the user, whether to acquire the NVOD program metadata or not, the interactivity between an NVOD program server and the user is improved.
502. The NVOD service control function verifies the request for acquiring the NVOD program metadata. After the verification is passed, step 303 is executed. If the verification is not passed, the process ends.
   Through this step, the validity of a user equipment is verified. When the NVOD channel is a fee-based service, paying users and not paying users can be distinguished through the verification. According to the result of the verification, it is determined whether to send the media stream of the NVOD program to the user or not. Or, when the users are classified into different levels and different users have different authorities to request playing, different levels of users can be distinguished through the verification, and different request authorities are given.
   When the NVOD channel described in this embodiment of the present invention is a public program and it is not necessary to distinguish the users, this step may be omitted.
503. The NVOD service control function sends the request for acquiring the NVOD program metadata to an NVOD metadata server.
504. After receiving the request for acquiring the NVOD program metadata, the NVOD metadata server sends the NVOD program metadata to the NVOD service control function.
505. After receiving the NVOD program metadata, the NVOD service control function forwards the NVOD program metadata to the user equipment. The NVOD program metadata includes information, such as a list of program names, durations of programs, brief descriptions of contents of programs, and identifiers for identifying NVOD programs. The user equipment receives and displays the NVOD program metadata for selection by the user, and the user may browse a list of NVOD program names and detailed information of a single NVOD program.
506. After receiving the NVOD program metadata, the user equipment displays NVOD program information, and the user may directly select, through the user equipment, a next NVOD program that the user wishes to play, that is, the user sends a playing request.
   The playing request includes an NVOD program that the user selects from the NVOD program metadata through the user equipment. The NVOD service control function in the NVOD channel server receives the playing request.
507. The NVOD service control function determines, according to the playing request, the next NVOD program to be played. The next NVOD program to be played may be determined in the following two ways:
   Firstly, according to a time sequence, a first NVOD program requested to be played is determined to be the next NVOD program to be played. When the next NVOD program to be played is determined in this way, if a user wants to successfully request the playing, the user needs to send the playing request actively and quickly, which may motivate the user.
   Secondly, an NVOD program that is most frequently requested to be played during a specified time period may also be determined to be the next NVOD program to be played. When the next NVOD program to be played is determined in this way, the users have sufficient time to select target NVOD programs, and played NVOD programs are expected by most of the users and the requirements of most of the users may be met.
508. After determining the next NVOD program to be played, the NVOD service control function sends, to the NVOD media control function, a message indicating the determined NVOD program to be played next.
509. After receiving the message indicating the playing of the determined NVOD program to be played next, the NVOD media control function sends, to an NVOD media server, a message about the determined NVOD program to be played next.
5010. According to the received the message about the next NVOD program to be played, the NVOD media server sends the media stream of the determined NVOD program to the user equipment in multicast or broadcast mode. The sending may be performed in the following two ways:
   Firstly, after the next NVOD program to be played is determined, the media stream of the determined NVOD program is sent immediately in multicast or broadcast mode. This way responds quickly to the playing request of the user and may implement the playing request of the user as soon as possible.
   Secondly, after the next NVOD program to be played is determined, the media stream of the determined NVOD program is not sent in multicast or broadcast mode until a currently played NVOD program is played to the end. This way responds slowly to the playing request of the user, but the NVOD program that is played each time can be played to the end, so that the user enjoys the whole NVOD program.
5011. The NVOD service control function records the number of times that the NVOD program is successfully played.

After the playing request is accepted and a corresponding NVOD program is played, the number of times that each NVOD program is successfully played is recorded, so as to summarize and collect statistics on the number of times that each NVOD program is played, and provide a basis for the management of NVOD programs, such as adding and deleting NVOD programs.

The information interaction process of a conventional IPTV system is simple.

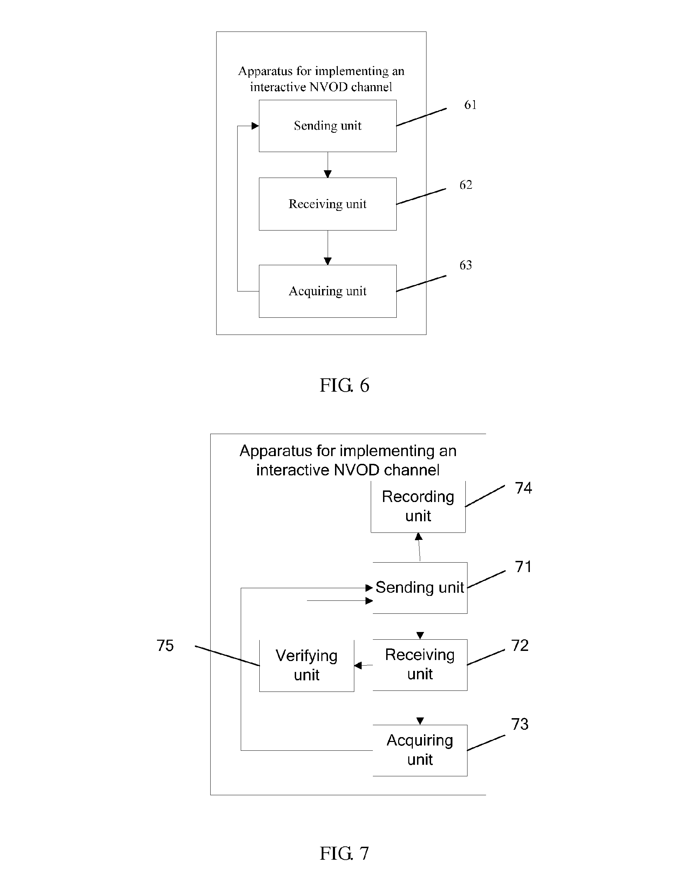

An embodiment of the present invention provides an apparatus for implementing an interactive NVOD channel. As shown in FIG. 6, the apparatus includes: a sending unit 61, a receiving unit 62, and an acquiring unit 63.

The sending unit 61 sends NVOD program metadata to a user equipment, where the NVOD program metadata includes information, such as a list of program names, durations of programs, brief descriptions of contents of programs, and identifiers for identifying NVOD programs. The user equipment receives and displays the NVOD program metadata for selection by a user, and the user may browse a list of NVOD program names and detailed information of a single program. After the user selects, from the NVOD program metadata, a next NVOD program that the user wishes to play, that is, after the user sends a playing request, the receiving unit 62 receives the request for playing an NVOD program, where the playing request is sent by the user equipment and includes an NVOD program that the user selects from the NVOD program metadata through the user equipment. The acquiring unit 63 determines, according to the playing request, the next NVOD program to be played, and after the next NVOD program to be played is determined, the sending unit 61 sends the media stream of the determined NVOD program in multicast/broadcast mode.

In the apparatus for implementing an interactive NVOD channel according to this embodiment, the user may directly select, through the user equipment, the next NVOD program that the user wishes to play; after the user directly selects, through the user equipment, the next NVOD program that the user wishes to play, that is, after the user sends the playing request, the receiving unit receives the playing request of the user; the acquiring unit determines, according to the playing request, the next NVOD program to be played; and after the next NVOD program to be played is determined, the sending unit sends the media stream of the next NVOD program to be played to the user equipment.

According to the technical solution of this embodiment, the user can directly participate, through the user equipment, in the selection of the program to be played by an NVOD channel server, so as to implement the interactive NVOD channel. Furthermore, no additional large-size device is needed for implementing the technical solution of the method for implementing an interactive NVOD channel according to this embodiment of the present invention, and the technical solution can be implemented by simply making corresponding expansion and modification in software, so the operation cost for implementing the technical solution of this embodiment of the present invention is low.

An embodiment of the present invention provides an improved apparatus for implementing an interactive NVOD channel. As shown in FIG. 7, the apparatus includes: a sending unit 71, a receiving unit 72, an acquiring unit 73, a recording unit 74, and a verifying unit 75.

The receiving unit 72 receives a request for acquiring NVOD program metadata, where the request is sent by a user; the verifying unit 75 verifies the request for acquiring the NVOD program metadata; and after the verification is passed, the sending unit 71 sends the NVOD program metadata to a user equipment. The NVOD program metadata includes information, such as a list of program names, durations of programs, brief descriptions of contents of programs, and identifiers for identifying NVOD programs. The user equipment receives and displays the NVOD program metadata for selection by the user, and the user may browse a list of NVOD program names and detailed information of a single program. After the user selects, from the NVOD program metadata, a next NVOD program that the user wishes to play, that is, after the user sends a playing request, the receiving unit 72 receives the request for playing the NVOD program, where the playing request is sent by the user equipment and includes an NVOD program that the user selects from the NVOD program metadata through the user equipment. The acquiring unit 73 determines, according to the playing request, the next NVOD program to be played, and after the acquiring unit 73 determines the next NVOD program to be played, the sending unit 71 sends the media stream of the determined NVOD program in multicast/broadcast mode. After the sending unit 71 sends the media stream of the determined NVOD program in multicast/broadcast mode, the recording unit 74 records the number of times that the NVOD program is successfully played.

In the apparatus for implementing an interactive NVOD channel according to this embodiment, the user may directly select, through the user equipment, the next NVOD program that the user wishes to play; after the user directly selects, through the user equipment, the next NVOD program that the user wishes to play, that is, after the user sends the playing request, the playing request is verified according to needs; the receiving unit receives the playing request of the user; the acquiring unit determines, according to the playing request, the next NVOD program to be played; and after the next NVOD program to be played is determined, the sending unit sends the media stream of the next NVOD program to be played to the user equipment. The recording unit records the number of times that the NVOD program is successfully played.

According to the technical solution of this embodiment, the user can directly participate, through the user equipment, in the selection of the program to be played by an NVOD channel server, so as to implement the interactive NVOD channel. Furthermore, no additional large-size device is needed for implementing the technical solution of the method for implementing an interactive NVOD channel according to this embodiment of the present invention, and the technical solution can be implemented by simply making corresponding expansion and modification in software, so the operation cost for implementing the technical solution of this embodiment of the present invention is low. Furthermore, the validity of the user can be verified.

After the playing request is accepted and a corresponding NVOD program is played, the number of times that each NVOD program is successfully played is recorded, so as to summarize and collect statistics on the number of times that each NVOD program is played, and provide a basis for the management of NVOD programs, such as adding and deleting NVOD programs.

In this embodiment, the verifying unit 75 verifies the request for acquiring the NVOD program metadata and verifies the validity of the user, so as to ensure that the media stream of the NVOD program can be sent to the user equipment of the designated user. When an NVOD channel is a fee-based service, paying users and not paying users can be distinguished through the verification. According to the result of the verification, it is determined whether to send the media stream of the NVOD program to the user or not. Or, when the users are classified into different levels and different users have different authorities to request playing, different levels of users can be distinguished through the verification, and different request authorities are given.

With the apparatus for implementing an interactive NVOD channel according to this embodiment, a preferred implementation manner is provided: The NVOD program metadata includes NVOD programs and on-demand links corresponding to the NVOD programs, and the playing request is sent by the user equipment according to an on-demand link corresponding to the NVOD program selected by the user. The on-demand link facilitates the user's operation. The user may directly send the playing request by selecting the on-demand link, without the need of any additional device, such as a telephone.

In the apparatus for implementing an interactive NVOD channel according to this embodiment, the user may directly send the playing request through an on-demand link in the NVOD program metadata shown on the user equipment, and no additional large-size device is needed for implementing the technical solution of the method for implementing an interactive NVOD channel according to this embodiment of the present invention, and the technical solution can be implemented by simply adding a corresponding module for processing the playing request and by making corresponding expansion and modification in software, so the operation cost for implementing the technical solution of this embodiment of the present invention is low.

Multiple methods for the acquiring unit 73 in this embodiment to determine, according to the playing request, the next NVOD program to be played exist. The following are two preferred methods for this embodiment.

Firstly, the acquiring unit 73 determines, according to a time sequence, a first NVOD program requested to be played to be the next NVOD program to be played. When the next NVOD program to be played is determined in this way, if a user wants to successfully request the playing, the user needs to send the playing request actively and quickly, which may motivate the user.

Secondly, the acquiring unit 73 may also determine an NVOD program that is most frequently requested to be played during a specified time period to be the next NVOD program to be played. When the next NVOD program to be played is determined in this way, users have sufficient time to select target NVOD programs, and played NVOD programs are expected by most of the users and the requirements of most of the users may be met.

In practical applications, an interactive voting NVOD channel and an interactive on-demand NVOD channel may be designed. The user may send a request for an NVOD program by using a remote control to select a program guide or by controlling a mouse to click an NVOD program guide or by other means that may implement selection of an NVOD program through the user equipment. The process that an NVOD program request is sent by using a remote control to select a program guide is described hereinafter.

For the interactive voting NVOD channel, a user may browse all program metadata included in the NVOD channel, and for a next program to be played, the user may use a user equipment to vote. The user may use the remote control to select to check the voting of a current video on demand (COD) list. Before a next program is played, the user may use the remote control to select a certain NVOD program in an NVOD program list shown on the user equipment for voting, for example, to select an NVOD program A, which means that the next NVOD program that the user requests playing in the NVOD channel is the NVOD program A. At this time, the user equipment sends a request for playing the NVOD program. After the user votes through the user equipment, all user votes of the NVOD channel are summarized, the number of user votes of each NVOD program in the NVOD channel is queued and counted, and a next program to be played in the NVOD channel is decided according to the votes. After the next NVOD program to be played is determined, the stream of the NVOD program is sent.

For the interactive on-demand NVOD channel, a user may browse all program metadata included in the NVOD channel, and for a next program to be played, the user may use a user equipment to demand a program. The user may demand favorite programs of the user in the interval between two programs that are played, such as at the time of playing default advertisement programs, which is similar to demanding programs of the Broadcasting & Television Bureau by telephone. Herein, a terminal user may use a remote control to select a certain NVOD program from an NVOD program list shown on the user equipment and demand the selected NVOD program, for example, demand an NVOD program A. At this time, the user equipment sends a message, that is, a playing request of the user. After the user demands, through the user equipment, the next NVOD program to be played, playing requests of all users are received, and the next NVOD program to be played in the NVOD channel is decided according to the playing requests of all users; and the stream of the NVOD program is sent.

As a preferred implementation manner of the apparatus for implementing an interactive NVOD channel according to this embodiment, the sending unit 71 described in this embodiment may send the media stream of the determined NVOD program to the user equipment in multicast or broadcast mode in the following two ways:
Firstly, after the next NVOD program to be played is determined, the sending unit 71 immediately sends the media stream of the determined NVOD program in multicast or broadcast mode. This way responds quickly to the playing request of the user and may implement the playing request of the user as soon as possible.
Secondly, after the next NVOD program to be played is determined, the sending unit 71 does not send the media stream of the determined NVOD program in multicast or broadcast mode until a currently played NVOD program is played to the end. This way responds slowly to the playing request of the user, but the NVOD program that is played each time can be played to the end, so that the user enjoys the whole NVOD program.

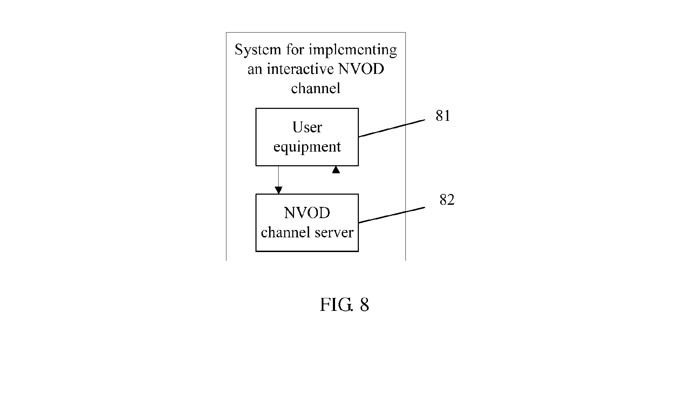

An embodiment of the present invention provides a system for implementing an interactive NVOD channel. As shown in FIG. 8, the system includes: a user equipment 81 and an NVOD channel server 82.

After the NVOD channel server 82 sends NVOD program metadata to the user equipment 81, the user equipment 81 receives the NVOD program metadata sent by the NVOD channel server 82. The NVOD program metadata includes information, such as a list of program names, durations of programs, brief descriptions of contents of programs, identifiers for identifying NVOD programs. The user equipment 81 receives and displays the NVOD program metadata for selection by a user, and the user may browse a list of NVOD program names and detailed information of a single program. After the user selects, from the NVOD program metadata, a next NVOD program that the user wishes to play, that is, after the user sends a playing request, the NVOD channel server 82 receives the request for playing the NVOD program, where the playing request is sent by the user equipment 81 and includes an NVOD program that the user selects from the NVOD program metadata through the user equipment 81, and the NVOD channel server 82 determines, according to the playing request, the next NVOD program to be played; and after determining the next NVOD program to be played, the NVOD channel server 82 sends the media stream of the determined NVOD program to the user equipment 81 in multicast/broadcast mode.

In the system for implementing an interactive NVOD channel according to this embodiment, the user may directly select, through the user equipment, the next NVOD program that the user wishes to play; after the user directly selects, through the user equipment, the next NVOD program that the user wishes to play, that is, after the user sends the playing request, the NVOD channel server receives the playing request of the user, and determines, according to the playing request, the next NVOD program to be played; and after determining the next NVOD program to be played, the NVOD channel server sends the media stream of the next NVOD program to be played.

According to the technical solution of this embodiment, the user can directly participate, through the user equipment, in the selection of the program to be played by the NVOD channel server, so as to implement the interactive NVOD channel. Furthermore, no additional large-size device is needed for implementing the technical solution of the method for implementing an interactive NVOD channel according to this embodiment of the present invention, and the technical solution can be implemented by simply making corresponding expansion and modification in software, so the operation cost for implementing the technical solution of this embodiment of the present invention is low.

As an implementation manner of the improved system for implementing an interactive NVOD channel according to this embodiment, the NVOD program metadata described in this embodiment also includes NVOD programs and on-demand links corresponding to the NVOD programs, and the playing request is sent by the user equipment according to an on-demand link corresponding to the NVOD program selected by the user. The on-demand link facilitates the user's operation. The user may directly send the playing request by selecting the on-demand link, without the need of any additional device, such as a telephone.

In the system for implementing an interactive NVOD channel according to this embodiment, the user may directly send the playing request through an on-demand link in the NVOD program metadata shown on the user equipment, and no additional large-size device is needed for implementing the technical solution of the method for implementing an interactive NVOD channel according to this embodiment of the present invention, and the technical solution can be implemented by simply adding a corresponding module for processing the playing request and by making corresponding expansion and modification in software, so the operation cost for implementing the technical solution of this embodiment of the present invention is low.

As a preferred implementation manner of the system for implementing an interactive NVOD channel according to this embodiment, there are multiple methods for the NVOD channel server 82 described in this embodiment to determine, according to the playing request, the next NVOD program to be played. The following are two preferred methods for this embodiment:
Firstly, the NVOD channel server 82 determines, according to a time sequence, a first NVOD program requested to be played to be the next NVOD program to be played. When the next NVOD program to be played is determined in this way, if a user wants to successfully request the playing, the user needs to send the playing request actively and quickly, which may motivate the user.
Secondly, the NVOD channel server 82 may also determine an NVOD program that is most frequently requested to be played during a specified time period to be the next NVOD program to be played. When the next NVOD program to be played is determined in this way, the users have sufficient time to select target NVOD programs, and played NVOD programs are expected by most of the users and the requirements of most of the users may be met.

There are multiple methods for the NVOD channel server to determine, according to the playing request, the next NVOD program to be played in this embodiment, and the methods described in this embodiment for the NVOD channel server to determine, according to the playing request, the next NVOD program to be played are two common methods.

In practical applications, an interactive voting NVOD channel and an interactive on-demand NVOD channel may be designed. The user may send a request for an NVOD program by using a remote control to select a program guide or by controlling a mouse to click an NVOD program guide or by other means that may implement selection of an NVOD program through the user equipment. The process that an NVOD program request is sent by using a remote control to select a program guide is described hereinafter.

For the interactive voting NVOD channel, a user may browse all program metadata included in the NVOD channel, and for a next program to be played, the user may use a user equipment to vote. The user may use the remote control to select to check the voting of a current video on demand (COD) list. Before a next program is played, the user may use the remote control to select a certain NVOD program in an NVOD program list shown on the user equipment for voting, for example, to select an NVOD program A, which means that the next NVOD program that the user requests playing in the NVOD channel is the NVOD program A. At this time, the user equipment sends a request for playing the NVOD program. After the user votes through the user equipment, all user votes of the NVOD channel are summarized, the number of user votes of each NVOD program in the NVOD channel is queued and counted, and a next program to be played in the NVOD channel is decided according to the votes. After the next NVOD program to be played is determined, the stream of the NVOD program is sent.

For the interactive on-demand NVOD channel, a user may browse all program metadata included in the NVOD channel, and for a next program to be played, the user may use a user equipment to demand a program. The user may demand favorite programs of the user in the interval between two programs that are played, such as at the time of playing default advertisement programs, which is similar to demanding programs of the Broadcasting & Television Bureau by telephone. Herein, a terminal user may use a remote control to select a certain NVOD program from an NVOD program list shown on the user equipment and demand the selected NVOD program, for example, demand an NVOD program A. At this time, the user equipment sends a message, that is, a playing request of the user. After the user demands, through the user equipment, the next NVOD program to be played, playing requests of all users are received, and the next NVOD program to be played in the NVOD channel is decided according to the playing requests of all users; and the stream of the NVOD program is sent.

As a preferred implementation manner of the system for implementing an interactive NVOD channel according to this embodiment, the NVOD channel server described in this embodiment may send the media stream of the determined NVOD program to the user equipment in multicast or broadcast mode in the following two ways:
Firstly, after the NVOD channel server 82 determines the next NVOD program to be played, the media stream of the determined NVOD program is sent immediately in multicast or broadcast mode. This way responds quickly to the playing request of the user and may implement the playing request of the user as soon as possible.
Secondly, after the NVOD channel server 82 determines the next NVOD program to be played, the media stream of the determined NVOD program is not sent in the form of multicast or broadcast until a currently played NVOD program is played to the end. This way responds slowly to the playing request of the user, but the NVOD program that is played each time can be played to the end, so that the user enjoys the whole NVOD program.

In the method, apparatus, and system for implementing an interactive NVOD channel according to the embodiments of the present invention, the NVOD channel server plays default programs at the time of initiating the interactive NVOD channel, and the NVOD channel server plays default programs when no user vote or no demand on a program is for the interactive NVOD channel.

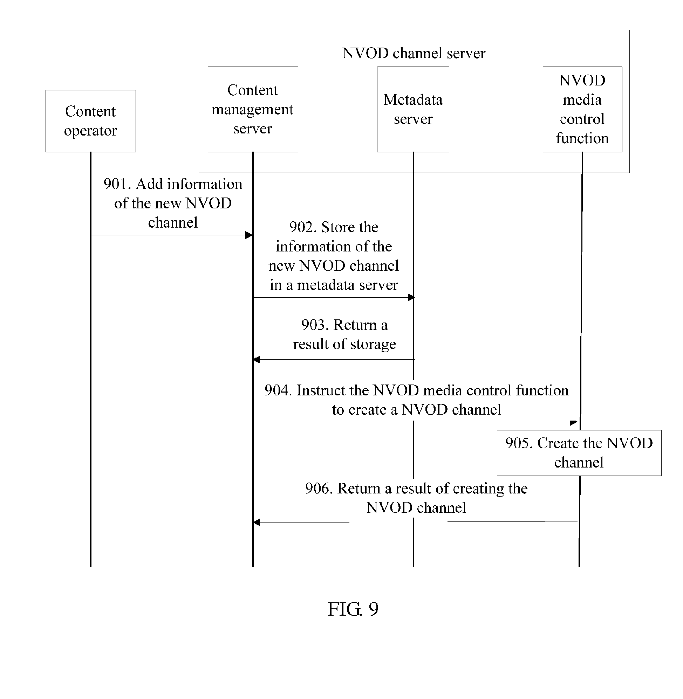

The number of NVOD channels described in the embodiments of the present invention may be increased or deleted according to requirements. As shown in FIG. 9, a process for adding a new NVOD channel is described hereinafter.
901. When a new NVOD channel needs to be added, firstly a content operator adds basic information of the new NVOD channel in a content management server of an interactive NVOD channel server, for example, a multicast address of the NVOD channel, and designates a form of interaction of the NVOD channel: an interactive voting NVOD channel, an interactive on-demand NVOD channel, a general NVOD channel, and so on. In addition, the new NVOD channel includes information, such as a list of NVOD programs, durations of programs, and default NVOD programs.
902. After the operator submits the basic information of the new NVOD channel, the content management server stores the basic information of the new NVOD channel in a metadata server.
903. After storing the basic information of the new NVOD channel, the metadata server returns a result of storage to the content management server.
904. After receiving the result of storage of the basic information of the new NVOD channel from the metadata server, the content management server notifies an NVOD media control function of creating the NVOD channel according to the information added by the operator about the new NVOD channel.
905. The NVOD media control function creates the NVOD channel according to the information added by the operator about the new NVOD channel.
906. After creating the NVOD channel, the NVOD media control function sends a result of creation to the content management server.

With the method, apparatus, and system for implementing an interactive NVOD channel according to the embodiments of the present invention, the need of carriers for carrying out NVOD channel services is met, and forms of interaction are diversified, which may be a general NVOD channel, an interactive voting NVOD channel, and an interactive on-demand NVOD channel. The service process of the NVOD channel described in the embodiments of the present invention complies with the TISPAN and OIPF (Open IPTV Forum) specifications, and has good openness.

Through the description of the foregoing embodiments, persons skilled in the art may clearly understand that the present invention may be implemented by means of software and necessary general hardware, or by means of hardware, but the former is preferred in many cases. Based on such understanding, the essence of the technical solutions of the present invention, or the part that makes contribution to the prior art, can be embodied in the form of a software product. The computer software product is stored in a readable storage medium, such as a computer floppy disk, a hard disk, or a CD-ROM, including several instructions to cause a computer device (which may be a personal computer, a server, or a network device) to execute the method described in each embodiment of the present invention.

Detailed above are only exemplary embodiments of the present invention, but the protection scope of the present invention is not limited thereto. Any modification or substitution readily conceivable by persons skilled in the art within the technical scope disclosed by the present invention shall be covered within the protection scope of the present invention. Therefore, the protection scope of the present invention is subject to the appended claims.

## Claims

1. A method for implementing an interactive near video on demand channel, comprising:
sending NVOD program metadata to a user equipment;
receiving a request for playing an NVOD program, wherein the playing request is sent by the user equipment and comprises an identifier of the NVOD program that a user selects from the NVOD program metadata through the user equipment;
determining, according to the playing request, a next NVOD program to be played; and
sending a media stream of the determined NVOD program in multicast/broadcast mode.

2. The method for implementing an interactive NVOD channel according to claim 1, wherein the NVOD program metadata comprises NVOD programs and on-demand links corresponding to the NVOD programs, and the playing request is sent by the user equipment through an on-demand link corresponding to the NVOD program selected by the user.

3. The method for implementing an interactive NVOD channel according to claim 1 or 2, wherein the determining, according to the playing request, the next NVOD program to be played is: determining a first NVOD program requested to be played to be the next NVOD program to be played, or determining an NVOD program that is most frequently requested to be played to be the next NVOD program to be played.

4. The method for implementing an interactive NVOD channel according to claim 1 or 2, wherein the sending the media stream of the determined NVOD program in multicast/broadcast mode is: after determining the next NVOD program to be played, immediately sending the media stream of the determined NVOD program in multicast/broadcast mode; or after determining the next NVOD program to be played, and after playing a currently played NVOD program to the end, sending the media stream of the determined NVOD program in multicast/broadcast mode.

5. The method for implementing an interactive NVOD channel according to claim 4, further comprising:
after sending the media stream of the determined NVOD program in multicast/broadcast mode, recording the number of times that the NVOD program is successfully played.

6. The method for implementing an interactive NVOD channel according to claim 1 or 2, wherein the method further comprises:
before the sending the NVOD program metadata to the user equipment, receiving a request for acquiring the NVOD program metadata, where the request is sent by the user; and
verifying the request for acquiring the NVOD program metadata;
the sending the NVOD program metadata to the user equipment is: sending the NVOD program metadata to the user equipment after the verification is passed.

7. The method for implementing an interactive NVOD channel according to claim 1 or 2, wherein before the sending the NVOD program metadata, the method further comprises:
reserving network transmission resources for the NVOD channel;
authorizing a request sent by the user for accessing the NVOD channel; and
allocating the network transmission resources to the NVOD channel.

8. An apparatus for implementing an interactive near video on demand (NVOD) channel, comprising:
a sending unit, configured to send NVOD program metadata to a user equipment;
a receiving unit, configured to receive a request for playing an NVOD program, wherein the playing request is sent by the user equipment and comprises an identifier of the NVOD program that a user selects from the NVOD program metadata through the user equipment;
an acquiring unit, configured to determine, according to the playing request, a next NVOD program to be played; and
a sending unit, configured to send a media stream of the determined NVOD program in multicast/broadcast mode.

9. The apparatus for implementing an interactive NVOD channel according to claim 8, wherein the NVOD program metadata comprises NVOD programs and on-demand links corresponding to the NVOD programs, and the playing request is sent by the user equipment through an on-demand link corresponding to the NVOD program selected by the user.

10. The apparatus for implementing an interactive NVOD channel according to claim 8 or 9, wherein the acquiring unit determines a first NVOD program requested to be played to be the next NVOD program to be played, or the acquiring unit determines an NVOD program that is most frequently requested to be played to be the next NVOD program to be played.

11. The apparatus for implementing an interactive NVOD channel according to claim 10, further comprising:
a recording unit, configured to, after the media stream of the determined NVOD program is sent in multicast/broadcast mode, record the number of times that the NVOD program is successfully played.

12. The apparatus for implementing an interactive NVOD channel according to claim 8 or 9, wherein the receiving unit is further configured to, before the NVOD program metadata is sent to the user equipment, receive a request sent by the user for acquiring the NVOD program metadata; the apparatus for implementing an interactive NVOD channel further comprises:
a verifying unit, configured to verify the request for acquiring the NVOD program metadata; and
the sending the NVOD program metadata to the user equipment is: sending the NVOD program metadata to the user equipment after the verification is passed.

13. A system for implementing an interactive near video on demand (NVOD) channel, comprising:
a user equipment, configured to receive NVOD program metadata sent by an NVOD server; and
an NVOD channel server, configured to receive a request for playing an NVOD program, wherein the playing request is sent by the user equipment and comprises an identifier of the NVOD program that a user selects from the NVOD program metadata through the user equipment, and determine, according to the playing request, a next NVOD program to be played; and after determining the next NVOD program to be played, send a media stream of the determined NVOD program in multicast/broadcast mode.

14. The system for implementing an interactive NVOD channel according to claim 13, wherein the NVOD program metadata comprises NVOD programs and on-demand links corresponding to the NVOD programs, and the playing request is sent by the user according to an on-demand link corresponding to the NVOD program selected by the user.

15. The system for implementing an interactive NVOD channel according to claim 13 or 14, wherein the NVOD channel server determines a first NVOD program requested to be played to be the next NVOD program to be played, or the NVOD channel server determines an NVOD program that is most frequently requested to be played to be the next NVOD program to be played.

16. The system for implementing an interactive NVOD channel according to claim 13 or 14, wherein after the next NVOD program to be played is determined, the NVOD channel server immediately sends the media stream of the determined NVOD program in multicast/broadcast mode; or after the next NVOD program to be played is determined and after a currently played NVOD program is played to the end, the NVOD channel server sends the media stream of the determined NVOD program in multicast/broadcast mode.
